# FASCICULE DE BREVET EUROPEEN

(11) **EP 3 209 872 B1**
(45) Date de publication et mention de la délivrance du brevet: **21.07.2021**
(21) Numéro de dépôt: 15793865.5
(22) Date de dépôt: 14.10.2015
(51) Int. Cl.: F02C 7/277, F02C 7/32

(54) **PACK AMOVIBLE DE RÉACTIVATION D'UN TURBOMOTEUR, ARCHITECTURE D'UN SYSTÈME PROPULSIF D'UN HÉLICOPTÈRE MULTI-MOTEUR ÉQUIPÉ D'UN TEL PACK ET HÉLICOPTÈRE CORRESPONDANT**
ENTFERNBARE ANLAGE ZUR REAKTIVIERUNG EINES TURBOMOTORS, ARCHITEKTUR FÜR EIN MEHRMOTORIGES SYSTEM ZUM ANTRIEB EINES HUBSCHRAUBER MIT SOLCH EINER ANLAGE UND ENTSPRECHENDER HUBSCHRAUBER
REMOVABLE PACK FOR REACTIVATING A TURBOSHAFT ENGINE, ARCHITECTURE FOR A MULTI-ENGINE SYSTEM FOR PROPELLING A HELICOPTER, PROVIDED WITH SUCH A PACK, AND CORRESPONDING HELICOPTER

(30) Priorité: 20.10.2014 FR 1460074
(43) Date de publication de la demande: 30.08.2017
(73) Titulaire: Safran Helicopter Engines, 64510 Bordes (FR)
(72) Inventeur: SEVE, Caroline, 77550 Moissy-Cramayel (FR); DARFEUIL, Pierre, F-64320 Idron (FR); MARCONI, Patrick, 77550 Moissy-Cramayel (FR); SERGHINE, Camel, F-64510 Boeil-bezing (FR); THIRIET, Romain, F-64110 Jurancon (FR)
(74) Mandataire: Gevers & Orès
(86) Numéro de dépôt international: PCT/FR2015/052765
(87) Numéro de publication internationale: WO 2016/062943

(56) Documents cités:
- EP-A1- 1 953 899
- EP-A2- 2 581 586
- FR-A- 1 104 252
- FR-A1- 2 967 133
- US-A1- 2012 122 631
- None

## Description

### 1. Domaine technique de l'invention

L'invention concerne un pack de réactivation d'un turbomoteur d'hélicoptère apte à fonctionner dans au moins un régime de veille au cours d'un vol stabilisé de l'hélicoptère, dit turbomoteur hybride.

L'invention concerne aussi une architecture d'un système propulsif d'un hélicoptère multi-moteur -en particulier bimoteur ou trimoteur- équipé d'au moins un tel pack de réactivation. L'invention concerne également un hélicoptère comprenant un système propulsif présentant une telle architecture.

### 2. Arrière-plan technologique

Un hélicoptère bimoteur ou trimoteur présente de manière connue un système propulsif comprenant deux ou trois turbomoteurs, chaque turbomoteur comprenant un générateur de gaz et une turbine libre entrainée en rotation par le générateur de gaz, et solidaire d'un arbre de sortie. L'arbre de sortie de chaque turbine libre est adapté pour mettre en mouvement une boite de transmission de puissance, qui entraîne elle-même le rotor de l'hélicoptère.

Il est connu que les turbomoteurs de l'hélicoptère fonctionnent à des régimes qui dépendent des conditions de vol de l'hélicoptère. Dans tout le texte qui suit, un hélicoptère est dit en situation de vol de croisière lorsqu'il évolue dans des conditions normales, au cours de toutes les phases du vol, hors phases transitoires de décollage, de montée, d'atterrissage ou de vol stationnaire. Dans tout le texte qui suit, un hélicoptère est dit en situation critique de vol lorsqu'il est nécessaire qu'il dispose de la puissance totale installée, c'est-à-dire dans les phases transitoires de décollage, de montée, d'atterrissage et de régime dans lequel un des turbomoteurs est défaillant, désigné par l'acronyme anglais OEI (One Engine Inoperative).

Il est connu que lorsque l'hélicoptère est en situation de vol de croisière, les turbomoteurs fonctionnent à des niveaux de puissance faibles, inférieurs à leur puissance maximale continue. Ces faibles niveaux de puissance entraînent une consommation spécifique (ci-après, Cs) définie comme le rapport entre la consommation horaire de carburant par la chambre de combustion du turbomoteur et la puissance mécanique fournie par ce turbomoteur, supérieure de l'ordre de 30% à la Cs de la puissance maximale de décollage, et donc une surconsommation en carburant en vol de croisière.

En outre, les turbomoteurs d'un hélicoptère sont conçus de manière surdimensionnée pour pouvoir maintenir l'hélicoptère en vol en cas de panne de l'un des moteurs. Cette situation de vol correspond au régime OEI décrit ci-dessus. Cette situation de vol survient suite à la perte d'un moteur et se traduit par le fait que chaque moteur en fonctionnement fournit une puissance bien au-delà de sa puissance nominale pour permettre à l'hélicoptère de faire face à une situation périlleuse, puis de pouvoir poursuivre son vol.

D'autre part, les turbomoteurs sont également surdimensionnés pour pouvoir assurer le vol dans tout le domaine de vol spécifié par l'avionneur et notamment le vol à des altitudes élevées et par temps chaud. Ces points de vol, très contraignants, notamment lorsque l'hélicoptère a une masse proche de sa masse maximale de décollage, ne sont rencontrés que dans certains cas d'utilisation.

Ces turbomoteurs surdimensionnés sont pénalisants en termes de masse et de consommation de carburant. Afin de réduire cette consommation en vol de croisière, il est envisagé de mettre en veille en vol l'un des turbomoteurs. Le ou les moteurs actifs fonctionnent alors à des niveaux de puissance plus élevés pour fournir toute la puissance nécessaire et donc à des niveaux de Cs plus favorables.

Les demandeurs ont proposé dans les demandes FR1151717 et FR1359766, des procédés d'optimisation de la consommation spécifique des turbomoteurs d'un hélicoptère par la possibilité de placer au moins un turbomoteur dans un régime de puissance stabilisée, dit continu, et au moins un turbomoteur dans un régime de veille particulier duquel il peut sortir de manière rapide ou normale, selon les besoins. Une sortie du régime de veille est dite normale lorsqu'un changement de situation de vol impose l'activation du turbomoteur en veille, par exemple lorsque l'hélicoptère va passer d'une situation de vol de croisière à une phase d'atterrissage. Une telle sortie de veille normale s'effectue sur une durée de 10s à 1 min. Une sortie du régime de veille est dite rapide lorsqu'une panne ou un déficit de puissance du moteur actif intervient ou que les conditions de vol deviennent soudainement difficiles. Une telle sortie de veille rapide s'effectue sur une durée inférieure à 10s.

La sortie d'un régime de veille d'un turbomoteur est obtenue par le biais d'un pack de réactivation du turbomoteur.

Le demandeur a déjà proposé plusieurs packs de réactivation d'un turbomoteur hybride. Par exemple, ce pack de réactivation peut comprendre un dispositif de stockage d'énergie tel qu'un stockage électrochimique du type batterie Li-Ion ou un stockage électrostatique du type surcapacité, qui permet de fournir au turbomoteur l'énergie nécessaire pour réactiver et atteindre rapidement un régime de fonctionnement nominal. Selon une autre proposition du demandeur, ce pack comprend un générateur de gaz à propergol solide adapté pour activer une turbine d'entrainement de l'arbre du turbomoteur.

L'ensemble des solutions proposées pour réactiver un turbomoteur en veille présente l'inconvénient d'alourdir le turbomoteur. Le gain en consommation de carburant obtenu par la mise en veille du turbomoteur est donc en partie perdu par le surpoids occasionné par le pack de réactivation.

En outre, au cours de sa vie, un hélicoptère peut effectuer des missions de différentes natures dont certaines ne permettent pas de mettre le turbomoteur hybride en veille. L'hybridation d'un tel turbomoteur, c'est-à-dire, la capacité de mettre ce turbomoteur en veille et de le réactiver par la mise en œuvre d'un pack de réactivation, peut donc, pour certaines missions détériorer les performances de l'hélicoptère.

De plus, un hélicoptère dont seul un turbomoteur est apte à être mis en veille peut présenter un vieillissement différent des autres turbomoteurs, introduisant ainsi un déséquilibre.

Les inventeurs ont donc cherché un moyen pour maintenir les performances d'un hélicoptère, quelles que soient les missions qu'il effectue. Les inventeurs ont notamment cherché à pouvoir sans difficultés majeures adapter un hélicoptère aux missions qu'il doit effectuer. Les inventeurs ont également cherché un moyen d'équilibrer le vieillissement des turbomoteurs sur un hélicoptère.

### 3. Objectifs de l'invention

L'invention vise à fournir un pack de réactivation d'un turbomoteur qui peut être monté sur un turbomoteur ou démonté du turbomoteur selon les besoins du vol.

L'invention vise aussi à fournir un pack de réactivation d'un turbomoteur qui permet d'hybrider un turbomoteur en fonction des besoins.

L'invention vise aussi à fournir un pack de réactivation qui permet d'équilibrer le vieillissement des turbomoteurs d'un hélicoptère.

L'invention vise aussi à fournir, dans au moins un mode de réalisation, une architecture d'un système propulsif d'un hélicoptère équipé d'un pack de réactivation selon l'invention.

### 4. Exposé de l'invention

Pour ce faire, l'invention concerne un pack amovible pour la réactivation d'un turbomoteur d'hélicoptère comprenant un générateur de gaz équipé d'un arbre, ledit turbomoteur étant apte à fonctionner dans au moins un régime de veille au cours d'un vol stabilisé de l'hélicoptère, ledit pack amovible comprenant :
- un boîtier amovible comprenant un arbre de sortie de boîtier,
- des moyens commandés d'entrainement en rotation dudit arbre de sortie de boîtier, dits moyens de réactivation dudit turbomoteur,
- des moyens mécaniques aptes à accoupler de manière réversible ledit arbre de sortie de boîtier audit arbre d'entrainement dudit générateur de gaz.

En outre, selon l'invention, lesdits moyens de réactivation dudit turbomoteur comprennent au moins:
- un premier dispositif de réactivation monté sur ledit boîtier et comprenant un arbre, dit premier arbre d'entrée de boîtier, relié mécaniquement audit arbre de sortie de boîtier, et des moyens commandés de mise en rotation dudit premier arbre d'entrée de boîtier, de manière à pouvoir entrainer ledit arbre de sortie en rotation,
- un second dispositif de réactivation monté sur ledit boîtier et comprenant un arbre, dit second arbre d'entrée de boîtier, relié mécaniquement audit arbre de sortie, et des moyens commandés de mise en rotation dudit second arbre d'entrée de boîtier, de manière à pouvoir entraîner ledit arbre de sortie en rotation.

L'invention permet donc d'hybrider un turbomoteur à la demande, c'est-à-dire d'autoriser une mise en veille du turbomoteur par la fourniture d'un pack de réactivation du turbomoteur en cas de besoin, ce pack étant amovible. Le pack comprend un boitier amovible dont l'arbre de sortie est couplé à l'arbre du générateur de gaz par des moyens d'accouplement réversible. L'arbre du boîtier peut donc être accouplé à l'arbre du générateur de gaz d'un turbomoteur lorsque l'on souhaite hybrider ce turbomoteur. Un pack de réactivation amovible selon l'invention permet donc de ne monter le pack sur un turbomoteur que lorsqu'un vol d'un hélicoptère équipé de ce turbomoteur est de nature à pouvoir rencontrer une phase de vol au cours de laquelle ce turbomoteur peut être mis en veille. De plus, lors d'une telle mission, il est possible de choisir sur quel turbomoteur le pack amovible est monté, de telle sorte que les vieillissements des différents turbomoteurs d'un hélicoptère peuvent être harmonisés. L'harmonisation de ces vieillissements peut par exemple avoir pour but de faire coïncider les dates de maintenance des différents turbomoteurs d'un hélicoptère pour limiter l'immobilisation de l'hélicoptère. Pour tous les vols où une mise en veille est a priori impossible, le pack de réactivation amovible est démonté du turbomoteur, ce qui évite de pénaliser l'hélicoptère par un surpoids inutile. Un pack de réactivation d'un turbomoteur peut également être monté sur différents turbomoteurs et donc sur différents hélicoptères. Un même pack peut donc participer à l'hybridation de différents turbomoteurs de différents hélicoptères.

En outre, les moyens de réactivation du turbomoteur comprennent deux dispositifs de réactivation, chaque dispositif étant monté et supporté par le boîtier amovible. Le montage/démontage du boitier amovible sur le turbomoteur par le biais des moyens d'accouplement réversible emporte donc le montage/démontage des dispositifs de réactivation du turbomoteur. Un pack de réactivation selon l'invention forme donc un pack prêt à l'emploi (plus connu sous la dénomination anglaise de « *plug and play* »)*.* Chaque dispositif de réactivation comprend en outre des moyens de mise en rotation d'un arbre d'entrée dans le boîtier amovible relié mécaniquement à l'arbre de sortie du boîtier. Cette architecture forme donc deux unités indépendantes, chaque unité étant formée d'un dispositif de réactivation et étant remplaçable indépendamment de l'autre.

Avantageusement et selon l'invention, lesdits moyens d'accouplement réversible dudit arbre de sortie de boîtier audit arbre d'entraînement dudit générateur de gaz sont formés par une boite accessoire dudit turbomoteur.

Selon cette variante, l'accouplement du pack amovible à l'arbre d'entrainement du générateur de gaz dudit turbomoteur est obtenu par le biais d'une boite accessoire du turbomoteur. Une boite accessoire d'un turbomoteur comprend par exemple un ensemble de pignons qui permet l'entrainement de servitudes nécessaires au fonctionnement du générateur de gaz du turbomoteur et éventuellement d'équipements spécifiques de l'hélicoptère, tels que des groupes de climatisation ou tout autre accessoire. Selon cette variante, l'arbre de sortie du boîtier amovible est engrené de manière réversible dans un pignon de la boite accessoire.

Selon l'invention, lesdits moyens commandés de mise en rotation dudit premier arbre d'entrée de boîtier dudit premier dispositif de réactivation sont aptes à entraîner ledit premier arbre d'entrée à une vitesse prédéterminée dans un délai inférieur au délai nécessaire pour que lesdits moyens de mise en rotation dudit second arbre d'entrée dudit second dispositif de réactivation entrainent ledit second arbre d'entrée à une vitesse prédéterminée, ledit premier dispositif de réactivation formant ainsi un dispositif de réactivation rapide dudit turbomoteur et ledit second dispositif de réactivation formant un dispositif de réactivation normale dudit turbomoteur.

Les deux dispositifs de réactivation présentent des caractéristiques distinctes. En particulier, le premier dispositif de réactivation permet la réactivation rapide du turbomoteur, par exemple lorsque la pleine puissance du turbomoteur en veille est rapidement nécessaire du fait d'une panne d'un autre turbomoteur. Le second dispositif de réactivation permet une réactivation normale du turbomoteur, par exemple lorsque l'hélicoptère va passer d'une situation de vol de croisière ou économique à une phase d'atterrissage où la pleine puissance des moteurs est nécessaire.

Avantageusement et selon l'invention, lesdits moyens de mise en rotation dudit dispositif de réactivation rapide comprennent un générateur à propergol solide, une turbine pneumatique reliée à un stockeur pneumatique, une turbine hydraulique reliée à un stockeur hydropneumatique, ou une machine électrique reliée à un stockeur d'énergie électrique.

Avantageusement et selon l'invention, le boîtier amovible d'accouplement comprend un arbre intermédiaire portant un premier pignon intermédiaire engrené dans une couronne dentée portée par ledit premier arbre d'entrée de boîtier, et un second pignon intermédiaire engrené dans une couronne dentée portée par ledit second arbre d'entrée de boîtier, ledit arbre de sortie de boîtier étant couplé audit second arbre d'entrée de boîtier.

Cette architecture du boîtier amovible permet par exemple de réduire ou multiplier la vitesse de la chaine de réactivation rapide en choisissant des rapports d'engrenage adaptés. De préférence, le premier arbre d'entrée et le second arbre d'entrée sont parallèles de sorte qu'ils forment chacun, avec le dispositif de réactivation associé, une unité indépendante, remplaçable éventuellement indépendamment de l'autre.

Avantageusement et selon cette variante, le premier pignon intermédiaire est monté sur ledit arbre intermédiaire par le biais d'une roue libre configurée et orientée pour pouvoir entrainer ledit arbre intermédiaire en rotation en cas de rotation dudit premier arbre d'entrée.

La roue libre permet de transférer à l'arbre intermédiaire la puissance mécanique du premier arbre d'entrée transmise par le dispositif de réactivation rapide. L'arbre intermédiaire transmet ainsi ensuite la puissance mécanique reçue à l'arbre de sortie, par le biais du premier arbre d'entrée relié mécaniquement à cet arbre intermédiaire. En revanche, la puissance transmise à l'arbre intermédiaire par le biais du second arbre d'entrée n'est pas transmise au premier arbre d'entrée par le biais de la roue libre car cette dernière glisse. Cela permet de protéger la chaine de réactivation rapide. En outre, une telle architecture permet de garantir que lors d'une demande de réactivation rapide, la puissance est toujours transmise au turbomoteur, même si le dispositif de réactivation normale est également actif. En d'autres termes, la chaine de réactivation rapide prend le pas sur la chaine de réactivation normale.

Selon une autre variante, le boîtier peut comprendre deux arbres intermédiaires, un premier arbre intermédiaire portant le premier pignon intermédiaire engrené dans le pignon porté par ledit premier arbre d'entrée de boîtier, et un second arbre intermédiaire portant le second pignon intermédiaire engrené dans le pignon porté par ledit second arbre d'entrée de boîtier, les deux arbres intermédiaires étant mécaniquement reliés l'un à l'autre, par exemple par le biais d'une roue libre.

Avantageusement et selon l'invention, le boîtier amovible comprend un carter étanche comprenant une ouverture de lubrification pour permettre de lubrifier les mécanismes dudit boîtier amovible.

L'invention concerne également une architecture d'un système propulsif d'un hélicoptère multi-moteur comprenant des turbomoteurs reliés à une boite de transmission de puissance, caractérisée en ce qu'elle comprend :
- au moins un turbomoteur parmi lesdits turbomoteurs, dit turbomoteur hybride, apte à fonctionner dans au moins un régime de veille au cours d'un vol stabilisé de l'hélicoptère, les autres turbomoteurs fonctionnant seuls au cours de ce vol stabilisé,
- un pack amovible de réactivation d'un turbomoteur selon l'invention monté sur ledit turbomoteur hybride de manière à permettre sur commande de sortir ledit turbomoteur hybride d'un régime de veille.

L'invention concerne également un hélicoptère comprenant un système propulsif caractérisé en ce que ledit système propulsif présente une architecture selon l'invention.

L'invention concerne également un pack de réactivation amovible d'un turbomoteur, une architecture d'un système propulsif d'un hélicoptère multi-moteurs, et un hélicoptère équipé d'un système propulsif présentant une telle architecture, caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un pack de réactivation amovible d'un turbomoteur selon un mode de réalisation de l'invention monté sur un turbomoteur,
- la figure 2 est une autre vue schématique d'un pack de réactivation amovible d'un turbomoteur selon un mode de réalisation de l'invention,
- la figure 3 est une vue schématique d'un hélicoptère comprenant un turbomoteur équipé d'un pack de réactivation selon un mode de réalisation de l'invention.

### 6. Description détaillée d'un mode de réalisation de l'invention

Sur les figures, les échelles et les proportions ne sont pas respectées et ce, à des fins d'illustration et de clarté.

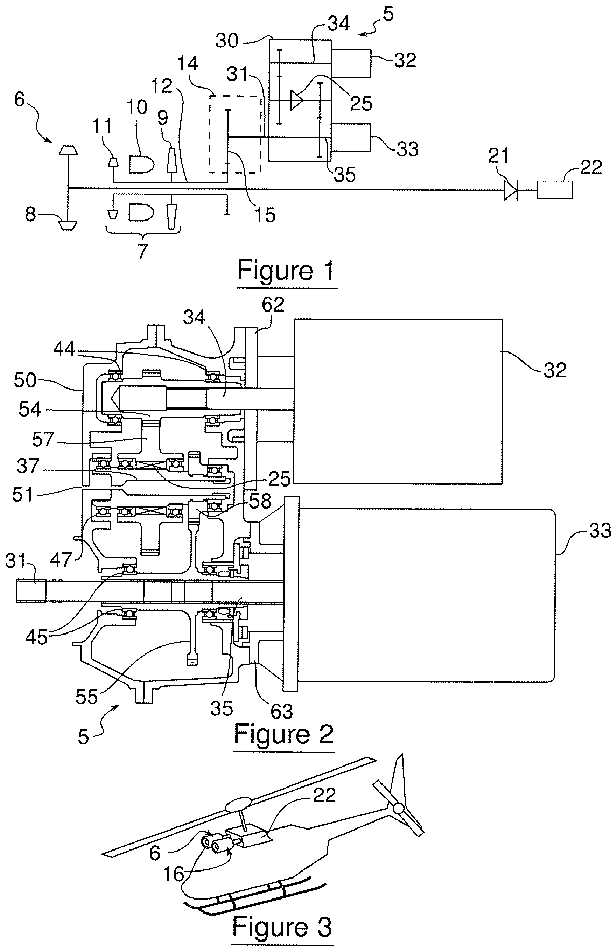

La figure 1 est une vue schématique d'un pack 5 amovible de réactivation d'un turbomoteur selon un mode de réalisation de l'invention monté sur un turbomoteur 6 d'un hélicoptère.

Ce turbomoteur 6 comprend un générateur 7 de gaz et une turbine 8 libre entrainée en rotation par les gaz produits par le générateur 7 de gaz. A cet effet, le générateur 7 de gaz comprend un compresseur 9 d'air alimenté en air par une entrée d'air non représenté sur les figures. Le compresseur 9 alimente une chambre 10 de combustion d'un carburant dans l'air comprimé qui délivre des gaz brûlés fournissant de l'énergie cinétique. Une turbine 11 de détente partielle des gaz brûlés est en outre couplée au compresseur 10 par le biais d'un arbre 12 d'entraînement pour pouvoir entraîner en rotation le compresseur 10 et des équipements nécessaires au fonctionnement du générateur de gaz ou à l'hélicoptère. La partie résultante des gaz brûlés entraîne la turbine 8 libre de transmission de puissance, qui est reliée mécaniquement à une boite 22 de transmission de puissance par l'intermédiaire d'une roue libre 21.

Le pack 5 amovible de réactivation du turbomoteur 6 comprend un boîtier 30 amovible comprenant un arbre 31 de sortie de boîtier, un dispositif 32 de réactivation rapide du turbomoteur 6 monté sur le boîtier 30 et un dispositif 33 de réactivation normale du turbomoteur 6 monté sur le boîtier 30. Le dispositif 32 de réactivation rapide comprend en outre un arbre d'entrée de boîtier, dit premier arbre 34 d'entrée de boîtier relié mécaniquement à l'arbre 31 de sortie par un système d'engrenages décrit en détail en lien avec la figure 2. Le dispositif 33 de réactivation normale comprend également un arbre d'entrée de boîtier, dit second arbre 35 d'entrée de boîtier, également relié à l'arbre 31 de sortie de boîtier par un système d'engrenage décrit en lien avec la figure 2.

Le pack de réactivation comprend en outre des moyens d'accouplement réversible de l'arbre 31 de sortie de boîtier à l'arbre 12 d'entraînement du générateur 7 de gaz. Ces moyens sont formés par une boite 14 accessoire du turbomoteur 6. En d'autres termes, l'arbre 31 de sortie peut être accouplé/désaccouplé à un pignon 15 de la boite 14 accessoire du turbomoteur 6.

Un pack de réactivation selon l'invention peut donc être aisément monté/démonté sur un turbomoteur 6 en fonction des besoins de la mission de l'hélicoptère sur lequel le turbomoteur 6 est installé. Le turbomoteur 6 et les dispositifs 32, 33 de réactivation du turbomoteur sont en outre pilotés par un dispositif de contrôle-commande propre non représenté sur les figures à des fins de clarté.

La figure 2 présente en détail une architecture du boîtier 30 et en particulier du système d'engrenages reliant mécaniquement l'arbre 34 d'entrée du dispositif 32 de réactivation rapide et l'arbre 35 d'entrée du dispositif 33 de réactivation normale à l'arbre 31 de sortie de boîtier. Le boîtier 30 comprend un carter 50 dans lequel est logé le système d'engrenages. Chaque dispositif de réactivation comprend une platine 62, 63 fixée sur le carter 50 par le biais de moyens du type vis/écrous, non représentés sur les figures à des fins de clarté.

Ce système d'engrenages comprend l'arbre 34 monté sur des paliers 44 portés par le carter 50 et l'arbre 35 monté sur des paliers 45 portés par le carter 50. Les arbres 34 et 31 sont parallèles et présentent un entraxe qui est par exemple inférieur à 200 mm de manière à former un boitier compact aisément manipulable par un opérateur lors des opérations de montage/démontage du pack. L'arbre 34 comprend en outre une couronne 54 dentée engrenée dans un pignon 57 porté par un arbre 37 intermédiaire. Cet arbre 37 intermédiaire est monté sur des paliers 47 du carter 50. Selon le mode de réalisation des figures, le pignon 57 est monté sur l'arbre 37 intermédiaire par le biais d'une roue libre 25. L'arbre 37 intermédiaire comprend en outre un pignon 58 engrené dans la couronne 55 de l'arbre 35 relié au dispositif 33 de réactivation normale. La roue libre 25 est orientée de sorte qu'une rotation de l'arbre 34 entraine une rotation de l'arbre 37 intermédiaire, qui entraine lui-même l'arbre 35 en rotation. En revanche, une rotation de l'arbre 37 intermédiaire par le biais de l'arbre 35 n'entraine pas l'arbre 34 en rotation. Dans cette configuration, la roue libre 25 glisse.

Le carter 50 comprend en outre une ouverture 51 de lubrification du système d'engrenages. Cela permet de lubrifier à la fois les pignons, les couronnes et la roue libre du système d'engrenages.

Chaque dispositif de réactivation comprend en outre des moyens commandés de mise en rotation de l'arbre d'entrée de boîtier auquel il est relié.

Par exemple, les moyens commandés 32 de mise en rotation du premier arbre 34 d'entrée de boîtier du dispositif de réactivation rapide comprennent un générateur à propergol solide ou une turbine pneumatique reliée à un stockeur pneumatique ou une turbine hydraulique reliée à un stockeur hydropneumatique, ou une machine électrique reliée à un stockeur d'énergie électrique. De manière générale, il s'agit de moyens adaptés pour pouvoir mettre rapidement en mouvement ledit premier arbre 34 d'entrée de boîtier à une vitesse de rotation importante, par exemple supérieure à 30 000 tours/minute, pour pouvoir rapidement mettre en mouvement l'arbre 31 de sortie de boîtier et donc réactiver rapidement le turbomoteur 6 auquel le pack de réactivation est relié.

Les moyens commandés 33 de mise en rotation du second arbre 35 d'entrée de boîtier du dispositif de réactivation rapide comprennent par exemple une génératrice/démarreur adaptée pour entrainer l'arbre en rotation à une vitesse de l'ordre de 10 000 à 20 000 tours/minute.

L'invention concerne également une architecture d'un système propulsif d'un hélicoptère multi-moteur comprenant des turbomoteurs 6, 16 reliés à une boite 22 de transmission de puissance comme présenté sur la figure 3. Selon cette architecture, un turbomoteur 6 est équipé, par le biais de sa boite accessoire, d'un pack amovible de réactivation tel que décrit en lien avec les figures 1 et 2.

## Revendications

1. Pack amovible pour la réactivation d'un turbomoteur (6) d'hélicoptère comprenant un générateur (7) de gaz équipé d'un arbre (12) d'entrainement, ledit turbomoteur (6) étant apte à fonctionner dans au moins un régime de veille au cours d'un vol stabilisé de l'hélicoptère, ledit pack amovible comprenant :
- un boîtier (30) amovible comprenant un arbre (31) de sortie de boîtier,
- des moyens (32, 33) commandés d'entrainement en rotation dudit arbre (31) de sortie de boîtier, dits moyens de réactivation dudit turbomoteur, comprenant au moins :
• un premier dispositif (32) de réactivation monté sur ledit boîtier (30) et comprenant un arbre, dit premier arbre (34) d'entrée de boîtier, relié mécaniquement audit arbre (31) de sortie de boîtier, et des moyens commandés de mise en rotation dudit premier arbre (34) d'entrée de boîtier,
• un second dispositif (33) de réactivation monté sur ledit boîtier (30) et comprenant un arbre, dit second arbre (35) d'entrée de boîtier, relié mécaniquement audit arbre (31) de sortie, et des moyens commandés de mise en rotation dudit second arbre (35) d'entrée de boîtier,
- des moyens (14) mécaniques aptes à accoupler de manière réversible ledit arbre (31) de sortie de boîtier audit arbre (12) d'entrainement dudit générateur de gaz,
ledit pack amovible étant **caractérisé en ce que** lesdits moyens commandés de mise en rotation dudit premier arbre (34) d'entrée de boîtier dudit premier dispositif (32) de réactivation sont aptes à entraîner ledit premier arbre (34) d'entrée à une vitesse prédéterminée dans un délai inférieur au délai nécessaire pour que lesdits moyens de mise en rotation dudit second arbre (35) d'entrée dudit second dispositif (33) de réactivation entrainent ledit second arbre (35) d'entrée à une vitesse prédéterminée, ledit premier dispositif (32) de réactivation formant ainsi un dispositif de réactivation rapide dudit turbomoteur (6) et ledit second dispositif (33) de réactivation formant un dispositif de réactivation normale dudit turbomoteur (6).

2. Pack selon la revendication 1, **caractérisé en ce que** lesdits moyens d'accouplement réversible dudit arbre (31) de sortie de boîtier audit arbre (12) d'entraînement dudit générateur de gaz sont formés par une boite (14) accessoire dudit turbomoteur (6).

3. Pack selon l'une quelconque des revendications précédentes, **caractérisé en ce que** lesdits moyens de mise en rotation dudit dispositif (32) de réactivation rapide comprennent un générateur à propergol solide, une turbine pneumatique reliée à un stockeur pneumatique, une turbine hydraulique reliée à un stockeur hydropneumatique, ou une machine électrique reliée à un stockeur d'énergie électrique.

4. Pack selon l'une des revendications 1 à 3, **caractérisé en ce que** ledit boîtier (30) amovible comprend un arbre (37) intermédiaire portant un premier pignon (57) intermédiaire engrené dans une couronne dentée (54) portée par ledit premier arbre (34) d'entrée de boîtier et un second pignon (58) intermédiaire engrené dans une couronne dentée (55) portée par ledit second arbre (35) d'entrée de boîtier, ledit arbre (31) de sortie de boîtier étant couplé audit second arbre (35) d'entrée de boîtier.

5. Pack selon la revendication 4, **caractérisé en ce que** ledit premier pignon (57) intermédiaire est monté sur ledit arbre (37) intermédiaire par le biais d'une roue libre (25) configurée et orientée pour pouvoir entrainer ledit arbre (37) intermédiaire en rotation en cas de rotation dudit premier arbre (34) d'entrée.

6. Pack selon l'une des revendications 1 à 5, **caractérisé en ce que** ledit boîtier (30) amovible comprend un carter (50) étanche comprenant une ouverture (51) de lubrification pour permettre de lubrifier les mécanismes dudit boîtier amovible.

7. Architecture d'un système propulsif d'un hélicoptère multi-moteur comprenant des turbomoteurs (6, 16) reliés à une boite (22) de transmission de puissance,
**caractérisée en ce qu'**elle comprend :
- au moins un turbomoteur (6) parmi lesdits turbomoteurs, dit turbomoteur hybride, apte à fonctionner dans au moins un régime de veille au cours d'un vol stabilisé de l'hélicoptère, les autres turbomoteurs fonctionnant seuls au cours de ce vol stabilisé,
- un pack (5) amovible de réactivation d'un turbomoteur selon l'une des revendications 1 à 6 monté sur ledit turbomoteur (6) hybride de manière à permettre sur commande de sortir ledit turbomoteur hybride d'un régime de veille.

8. Hélicoptère comprenant un système propulsif **caractérisé en ce que** ledit système propulsif présente une architecture selon la revendication 7.

## Patentansprüche

1. Herausnehmbare zur Reaktivierungspackung eines Turbomotors (6) eines Hubschraubers, umfassend einen mit einer Antriebswelle (12) ausgestatteten Gasgenerator (7), wobei der Turbomotor (6) fähig ist, in mindestens einem Ruhebetrieb während eines stabilisierten Flugs des Hubschraubers zu funktionieren, wobei die abnehmbare Anlage umfasst:
- einen abnehmbaren Kasten (30), der eine Kastenausgangswelle (31) umfasst,
- gesteuerte Mittel (32, 33), um die Kastenausgangswelle (31) in Drehung zu versetzen, als Reaktivierungsmittel des Turbomotors bezeichnet, mindestens umfassend:
• eine erste Reaktivierungsvorrichtung (32), die auf dem Kasten (30) angebracht ist und eine Welle umfasst, als erste Kasteneingangswelle (34) bezeichnet, die mechanisch mit der Kastenausgangwelle (31) verbunden ist, und gesteuerte Mittel, um die erste Kasteneingangswelle (34) in Drehung zu versetzen,
• eine zweite Reaktivierungsvorrichtung (33), die auf dem Kasten (30) angebracht ist und eine Welle umfasst, als zweite Kasteneingangswelle (35) bezeichnet, die mechanisch mit der Ausgangwelle (31) verbunden ist, und gesteuerte Mittel, um die zweite Kasteneingangswelle (35) in Drehung zu versetzen,
- mechanische Mittel (14), die fähig sind, auf umkehrbare Weise die Kastenausgangswelle (31) mit der Antriebswelle (12) des Gasgenerators zu koppeln,
wobei die Herausnehmbare Packung **dadurch gekennzeichnet ist, dass** die gesteuerten Mittel, um die erste Kasteneingangswelle (34) der ersten Reaktivierungsvorrichtung (32) in Drehung zu versetzen, fähig sind, die erste Eingangswelle (34) in einem Zeitraum auf eine vorbestimmte Geschwindigkeit anzutreiben, der kleiner ist als der Zeitraum, der nötig ist, damit die Mittel, um die zweite Eingangswelle (35) der zweiten Reaktivierungsvorrichtung (33) in Drehung zu versetzen, die zweite Eingangswelle (35) auf eine vorbestimmte Geschwindigkeit antreiben, wodurch die erste Reaktivierungsvorrichtung (32) eine schnelle Reaktivierungsvorrichtung des Turbomotors (6) bildet und die zweite Reaktivierungsvorrichtung (33) eine normale Reaktivierungsvorrichtung des Turbomotors (6) bildet.

2. Packung nach Anspruch 1, **dadurch gekennzeichnet, dass** die Mittel zur umkehrbaren Kopplung der Kastenausgangswelle (31) mit der Antriebswelle (12) des Gasgenerators durch ein zusätzliches Getriebe (14) des Turbomotors (6) gebildet werden.

3. Packung nach einem der vorstehenden Ansprüche, **dadurch gekennzeichnet, dass** die Mittel, um die schnelle Reaktivierungsvorrichtung (32) in Drehung zu versetzen, einen Generator mit Festtreibstoff, eine pneumatische Turbine, die mit einem pneumatischen Speicher verbunden ist, eine hydraulische Turbine, die mit einem hydropneumatischen Speicher verbunden ist, oder eine elektrische Maschine, die mit einem Stromspeicher verbunden ist, umfassen.

4. Packung nach einem der Ansprüche 1 bis 3, **dadurch gekennzeichnet, dass** der abnehmbare Kasten (30) eine Zwischenwelle (37) umfasst, die ein erstes Zwischenritzel (57) trägt, das in einen Zahnkranz (54) eingreift, der von der ersten Kasteneingangswelle (34) getragen wird, und ein zweites Zwischenritzel (58), das in einen Zahnkranz (55) eingreift, der von der zweiten Kasteneingangswelle (35) getragen wird, wobei die Kasteneingangswelle (31) mit der zweiten Kasteneingangswelle (35) gekoppelt ist.

5. Ppackung nach Anspruch 4, **dadurch gekennzeichnet, dass** das erste Zwischenritzel (57) mithilfe eines freien Rads (25), das konfiguriert und ausgerichtet ist, um die Zwischenwelle (37) im Falle einer Drehung der ersten Eingangswelle (34) in Drehung versetzen zu können, an der Zwischenwelle (37) angebracht ist.

6. Packung nach einem der Ansprüche 1 bis 5, **dadurch gekennzeichnet, dass** der abnehmbare Kasten (30) ein dichtes Gehäuse (50) umfasst, das eine Schmierungsöffnung (51) umfasst, um das Schmieren der Mechanismen des abnehmbaren Kastens zu ermöglichen.

7. Architektur eines Antriebssystems eines mehrmotorigen Hubschraubers, umfassend Turbomotoren (6, 16), die an ein Leistungsgetriebe (22) angeschlossen sind,
dadurch umfassend, dass sie umfasst:
- mindestens einen Turbomotor (6) unter den Turbomotoren, als Hydrid-Turbomotor bezeichnet, der fähig ist, in mindestens einem Ruhebetrieb während eines stabilisierten Flugs des Hubschraubers zu funktionieren, wobei die anderen Turbomotoren während dieses stabilisierten Flugs allein funktionieren;
- eine Herausnehmbare (5) zur Reaktivierungspackung eines Turbomotors nach einem der Ansprüche 1 bis 6, die derart auf dem Hydrid-Turbomotor (6) angebracht ist, dass ermöglicht wird, den Hydrid-Turbomotor auf Befehl aus einem Ruhebetrieb zu wecken.

8. Hubschrauber, ein Antriebssystem umfassend, **dadurch gekennzeichnet, dass** das Antriebssystem eine Architektur nach Anspruch 7 aufweist.

## Claims

1. Removable pack for the reactivation of a turboshaft engine (6) of a helicopter, comprising a gas generator (7) equipped with a drive shaft (12), said turboshaft engine (6) being capable of operating in at least one standby mode during a stable flight of the helicopter, said removable pack comprising:
- a removable gearbox (30) comprising a gearbox output shaft (31),
- controlled means (32, 33) for rotating said gearbox output shaft (31), referred to as reactivation means of said turboshaft engine, comprising at least:
• a first reactivation device (32) that is mounted on said gearbox (30) and comprises a shaft that is referred to as the first gearbox input shaft (34) and is mechanically connected to said gearbox output shaft (31), and controlled means for rotating said first gearbox input shaft (34),
• a second reactivation device (33) that is mounted on said gearbox (30) and comprises a shaft that is referred to as the second gearbox input shaft (35) and is mechanically connected to said output shaft (31), and controlled means for rotating said second gearbox input shaft (35),
- mechanical means (14) capable of reversibly coupling said gearbox output shaft (31) to said drive shaft (12) of said gas generator,
the removable pack being **characterised in that** said controlled means for rotating said first gearbox input shaft (34) of said first reactivation device (32) are capable of driving said first input shaft (34) at a predetermined speed for a period that is less than the period required for said means for rotating said second input shaft (35) of said second reactivation device (33) to drive said second input shaft (35) at a predetermined speed, said first reactivation device (32) thus forming a device for rapid reactivation of said turboshaft engine (6), and said second reactivation device (33) forming a device for normal reactivation of said turboshaft engine (6).

2. Pack according to claim 1, **characterised in that** said means for reversibly coupling said gearbox output shaft (31) to said drive shaft (12) of said gas generator are formed by an accessory gearbox (14) of said turboshaft engine (6).

3. Pack according to any of the preceding claims, **characterised in that** said means for rotating said rapid reactivation device (32) comprise a generator having a solid propellant, a pneumatic turbine that is connected to a pneumatic store, a hydraulic turbine that is connected to a hydropneumatic store, or an electrical machine that is connected to an electrical energy store.

4. Pack according to any of claims 1 to 3, **characterised in that** said removable gearbox (30) comprises an intermediate shaft (37) that carries a first intermediate pinion (57) that is meshed with a ring gear (54) carried by said first gearbox input shaft (34), and a second intermediate pinion (58) that is meshed with a ring gear (55) carried by said second gearbox input shaft (35), said gearbox output shaft (31) being coupled to said second gearbox input shaft (35).

5. Pack according to claim 4, **characterised in that** said first intermediate pinion (57) is mounted on said intermediate shaft (37) by means of a free wheel (25) that is designed and oriented so as to be able to rotate said intermediate shaft (37) if said first input shaft (34) is rotated.

6. Pack according to any of claims 1 to 5, **characterised in that** said removable gearbox (30) comprises a sealed casing (50) that comprises a lubrication opening (51) in order to allow lubrication of the mechanisms of said removable gearbox.

7. Architecture of a propulsion system of a multi-engine helicopter comprising turboshaft engines (6, 16) connected to a power transmission gearbox (22), **characterised in that** it comprises:
- at least one turboshaft engine (6) from said turboshaft engines, referred to as a hybrid turboshaft engine, which is capable of operating in at least one standby mode during a stable flight of the helicopter, the other turboshaft engines operating alone during this stable flight,
- a removable turboshaft engine reactivation pack (5) according to any of claims 1 to 6, which is mounted on said hybrid turboshaft engine (6) so as to make it possible for said hybrid turboshaft engine to leave a standby mode on demand.

8. Helicopter comprising a propulsion system, **characterised in that** said propulsion system has an architecture according to claim 7.
